# EUROPEAN PATENT SPECIFICATION

(11) **EP 3 255 951 B1**
(45) Date of publication and mention of the grant of the patent: **25.09.2019**
(21) Application number: 15883715.3
(22) Date of filing: 05.03.2015
(51) Int. Cl.: H04W 76/14, H04W 72/12

(54) **PSEUDO ACCESS METHOD, PSEUDO ACCESS DIRECT-CONNECTION SCHEDULING METHOD, STATIONS AND ACCESS POINT**
PSEUDOZUGANGSVERFAHREN, PSEUDOZUGANGSDIREKTVERBINDUNGSPLANUNGSVERFAHREN, STATIONEN UND ZUGANGSPUNKT
PROCÉDÉ DE PSEUDO-ACCÈS, PROCÉDÉ DE PLANIFICATION DE CONNEXION DIRECTE DE PSEUDO-ACCÈS, STATIONS ET POINT D'ACCÈS

(43) Date of publication of application: 13.12.2017
(73) Proprietor: Huawei Technologies Co., Ltd., Longgang District Shenzhen, Guangdong 518129 (CN)
(72) Inventor: DING, Zhiming, Shenzhen Guangdong 518129 (CN)
(74) Representative: Pfenning, Meinig & Partner mbB
(86) International application number: PCT/CN2015/073683
(87) International publication number: WO 2016/138658

(56) References cited:
- EP-A1- 1 653 668
- CN-A- 1 650 642
- CN-A- 102 781 002
- CN-A- 103 843 380
- US-A1- 2009 019 539
- US-A1- 2012 282 948
- ANONYMOUS: "IEEE Standard for Information Technology--Telecommunications and information exchange between systems--Local and metropolitan area networks--Specific requirements Part 11: Wireless LAN Medium Access Control (MAC) and Physical Layer (PHY) specifications Amendment 10: Mesh Networking", IEEE STANDARD, IEEE, PISCATAWAY, NJ, USA, 10 September 2011 (2011-09-10), pages 1-372, XP032337604, DOI: 10.1109/IEEESTD.2011.6018236 ISBN: 978-0-7381-6731-2

## Description

### TECHNICAL FIELD

The present invention relates to the communications field, and in particular, to a pseudo access method, a direct connection scheduling method for pseudo access, a station, and an access point.

### BACKGROUND

Direct communication means that two STAs (Station, station) (for example, user terminals) are associated with a same AP (Access Point, access point), but when the two STAs communicate with each other, a packet is directly sent to each other by using an air interface without being forwarded by the AP. When a STA 1 sends a message to a STA 2 by using an AP, a channel needs to be occupied twice, that is, once at uplink and once at downlink. However, a channel needs to be occupied only once when a direct link is used. In this way, utilization of a radio channel can be improved, and an attainable effective system throughput of a BSS (Basic Service Set, basic service set, that is, a wireless local area network centering on an AP) controlled by the AP can be improved.

In an existing standard, a direct link may work on a working channel, that is, a fundamental channel, of an AP or may work on a channel, that is, a non-fundamental channel, different from the working channel of the AP. When the direct link works on the fundamental channel, and data is transmitted on a direct link of the AP, a channel resource still needs to be requested from the AP. That is, when data is transmitted on the direct link, other STAs in a BSS (Basic Service Set, basic service set, that is, a wireless local area network centering on the AP) controlled by the AP and the AP cannot use a working channel that is being occupied. When the direct link works on the non-fundamental channel, the direct link does not occupy a resource of the working channel of the AP. Therefore, data transmission on another link in the BSS is not affected, but a STA on the direct link may content for a channel resource with another BSS.

With development of the IEEE802.11 technology, a working channel of an AP becomes increasingly broad, but a quantity of channels into which a limited radio spectrum may be divided is increasingly small. Consequently, when the AP works on a very broad radio channel, it becomes difficult for a STA to select a non-fundamental channel as a working channel of a direct link. Therefore, a main consideration is that the direct link still needs to work on a fundamental channel.

A WiFi network (that is, a network running the IEEE802.11 standard) runs in a free radio spectrum, and mainly uses a contention mechanism. The newest IEEE 802.11ax standard that is being formulated strives to improve efficiency of the WiFi network, and further improve a system throughput. In some dense user scenarios, use of a direct connection technology remarkably improves the system throughput, but in an existing standard, a STA on a direct link voluntarily contends for a channel.

In addition, in actual application, generally, two STAs may be directly connected to perform communication without being associated to one AP, for example, may be directly connected by using an ad hoc mode (ad hoc) defined in the IEEE802.11, or may be connected by using a P2P connection mode defined by the WFA (Wi-Fi Alliance, WiFi Alliance). A brand name of the P2P mode defined by the WFA is WiFi Direct. WiFi Direct is a mode in which multiple STAs are interconnected, where one STA plays a role similar to a group owner (Group Owner) of an AP, and another STA plays a role of a client, but most common P2P application is a connection of two STAs, for example, smartphones. In the present invention, a manner in which two STAs are directly connected without an infrastructure AP is collectively referred to as a P2P connection, to distinguish from a direct connection of two STAs served by one AP.

However, in a dense scenario, many STAs may be connected to an AP to perform an Internet service, and many STAs may perform P2P communication at the same time. The STAs may contend for a same spectrum resource. Consequently, channel use efficiency is low.

According to EP 1 653 668 A1 a wireless terminal and an access point/AP/ of a wireless local area network WLAN being part of the LAN are able to exchange data for the setup of a wireless link while the wireless terminal being unknown to the AP. The wireless terminal and the AP comprise an interface for the wireless link and means for interacting via the interface by exchanging data frames. The interacting means are adapted for constructing generated data frames for transmission and for decoding received data frames. Such wireless link corresponds to a restricted association being identified by a specific data from an exchanged data frame. And the restricted association corresponds to a restricted access within the LAN, the restricted access being defined by a dedicated virtual LAN/VLAN/. Such restrided access may be advantageously adapted for a telecommunication like an emergency call set up from the wireless terminal.

"802.11s-2011 - IEEE Standard for Information Technology--Telecommunications and information exchange between systems--Local and metropolitan area networks--Specific requirements Part 11: Wireless LAN Medium Access Control (MAC) and Physical Layer (PHY) specifications Amendment 10: Mesh Networking" describes the standard for operating Mesh Networks under 802.11, in which a mesh STA makes an MCF controlled channel access (MCCA) reservation by sending an MCCA setup request frame to become an MCCAOP owner. Further mesh STAs receiving the MCCA setup request frame are MCCAOP receivers. MCCAOP receivers are supposed to not initiate any transmission during the periods reserved by the MCCA reservation. Any AP is not at all involved in the scheduling in the MCCA.

In US 2009/019539 A1 a method for protecting wireless communications from denial of service attacks is provided. The method comprises establishing a first wireless connection between an access point device and a client device. The method also comprises receiving at the access point device a request for establishing a second wireless connection between the access point device and the client device while a state of the first wireless connection being an established state at an access point device side endpoint. The method comprises verifying whether the first wireless connection is in the established state at the client. Another example can be found in "Wi-Fi certified TDLS: Easy-to-use, security-protected direct links to improve performance of Wi-Fi devices", Wi-Fi Alliance August 2012.

### SUMMARY

The invention is set out in the appended set of indepednent claims. Further embodiments are disclosed in the dependent claims. The embodiments that do not fall within the scope of the claims shall be treated as examples. Embodiments of the present invention provide a direct connection scheduling method for pseudo access, a station, and an access point, so as to improve channel use efficiency for communication between STAs in a dense scenario.

The exemplary embodiments of the present invention have the following advantages: In the exemplary embodiments of the present invention, after finding an AP supporting pseudo access, a STA sends pseudo access information to the AP, and establishes a pseudo access association with the AP, so that a STA that is not an authorized user of the AP can perform pseudo access to the AP, and accept scheduling management by the AP. Therefore, in a dense scenario, multiple STAs can be prevented from contending for a same spectrum resource, thereby improving channel use efficiency for communication between the STAs.

### BRIEF DESCRIPTION OF DRAWINGS

FIG. 1 is a schematic flowchart of a pseudo access method according to an embodiment of the present invention;
FIG. 2 is another schematic flowchart of a pseudo access method according to an embodiment of the present invention;
FIG. 3 is another schematic flowchart of a pseudo access method according to an embodiment of the present invention;
FIG. 4 is another schematic flowchart of a pseudo access method according to an embodiment of the present invention;
FIG. 5 is a schematic flowchart of a direct connection scheduling method for pseudo access according to an embodiment of the present invention;
FIG. 6 is another schematic flowchart of a direct connection scheduling method for pseudo access according to an embodiment of the present invention;
FIG. 7 is another schematic flowchart of a direct connection scheduling method for pseudo access according to an embodiment of the present invention;
FIG. 8 is another schematic flowchart of a direct connection scheduling method for pseudo access according to an embodiment of the present invention;
FIG. 9 is another schematic flowchart of a direct connection scheduling method for pseudo access according to an embodiment of the present invention;
FIG. 10 is a schematic structural diagram of a station according to an embodiment of the present invention;
FIG. 11 is another schematic structural diagram of a station according to an embodiment of the present invention;
FIG. 12 is another schematic structural diagram of a station according to an embodiment of the present invention;
FIG. 13 is a schematic structural diagram of an access point according to an embodiment of the present invention;
FIG. 14 is another schematic structural diagram of an access point according to an embodiment of the present invention;
FIG. 15 is another schematic structural diagram of an access point according to an embodiment of the present invention;
FIG. 16 is another schematic structural diagram of an access point according to an embodiment of the present invention;
FIG. 17 is another schematic structural diagram of an access point according to an embodiment of the present invention;
FIG. 18 is another schematic structural diagram of a station according to an embodiment of the present invention;
FIG. 19 is another schematic structural diagram of a station according to an embodiment of the present invention;
FIG. 20 is another schematic structural diagram of an access point according to an embodiment of the present invention;
FIG. 21 is another schematic structural diagram of an access point according to an embodiment of the present invention; and
FIG. 22 is a schematic structural diagram of a device according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

It should be understood that, in the embodiments of the present invention, terms such as first and second may be used to describe STAs or APs, but the STAs or the APs should not be limited to these terms. These terms are only used to distinguish STAs or APs. For example, without departing from the scope of the embodiments of the present invention, a first STA may also be referred to as a second STA. Similarly, a second STA may also be referred to as a first STA. Similarly, a second AP may also be referred to as a third AP, or the like. This is not limited in the embodiments of the present invention.

A pseudo access method in an embodiment of the present invention is described below by separately using a STA and an AP as an execution body.
1. A STA is used as an execution body.

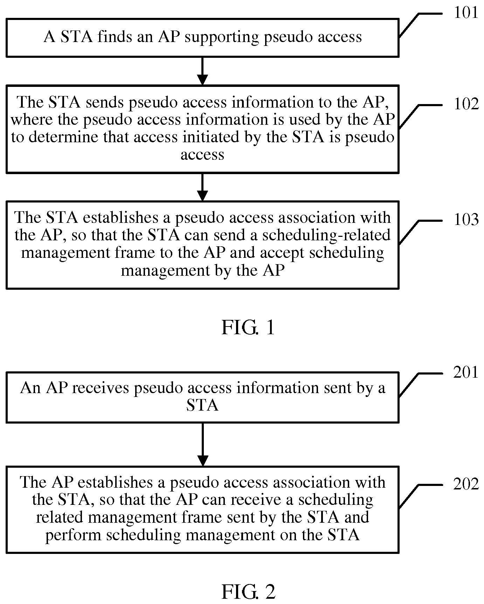

Referring to FIG. 1, an embodiment of a pseudo access method in the embodiments of the present invention includes the following steps.

101: A STA finds an AP supporting pseudo access.

A STA may find an AP supporting pseudo access, where the STA is not an authorized user of the AP, the pseudo access is used for enabling an unauthorized user that accesses the AP to send a scheduling-related management frame to the AP and accept scheduling management by the AP.

It should be noted that, the scheduling-related management frame may specifically include:
a management frame used for creating a direct link, that is, a DLS request, a DLS response, or the like;
a management frame used for creating or modifying a transport stream, that is, an ADDTS or the like; and
a management frame used for requesting a transmission resource, or the like.

It may be understood that, the STA may find an AP supporting pseudo access in multiple manners:
Optionally, the STA may listen for a broadcast frame that is sent by an AP and that can be received; and if a broadcast frame that is sent by a first AP and that is obtained by listening indicates that the first AP supports pseudo access, the STA determines that the first AP is the AP supporting pseudo access. Specifically, the AP may add indication information to a beacon message broadcast by the AP to indicate that the AP supports pseudo access.

Optionally, the STA may send a probe request frame, and add, to the probe request frame, information indicating that an AP supporting pseudo access is searched for; and then, the STA receives a probe response frame sent by a second AP, where the probe response frame indicates that the second AP is the AP supporting pseudo access. Specifically, when the STA runs in a network of the IEEE802.11 standard, the probe request message may be a probe request frame defined in the 802.11, and the probe response message may be a probe response frame defined in the 802.11.

102: The STA sends pseudo access information to the AP, where the pseudo access information is used by the AP to determine that access initiated by the STA is pseudo access.

After finding the AP supporting pseudo access, the STA sends pseudo access information to the AP, where the pseudo access information is used for enabling the AP to determine that access initiated by the STA is pseudo access.

103: The STA establishes a pseudo access association with the AP, so that the STA can send a scheduling-related management frame to the AP and accept scheduling management by the AP.

After sending the pseudo access information to the AP, the STA establishes a pseudo access association with the AP, so that the STA can send a scheduling-related management frame to the AP and accept scheduling management by the AP.

In this embodiment of the present invention, after finding an AP supporting pseudo access, a STA sends pseudo access information to the AP, and establishes a pseudo access association with the AP, so that a STA that is not an authorized user of the AP can perform pseudo access to the AP, and accept scheduling management by the AP. Therefore, in a dense scenario, multiple STAs can be prevented from contending for a same spectrum resource, thereby improving channel use efficiency for communication between the STAs.
2. An AP is used as an execution body.

Referring to FIG. 2, another embodiment of a pseudo access method in the embodiments of the present invention includes the following steps.

201: An AP receives pseudo access information sent by a STA.

An AP supporting pseudo access may receive pseudo access information sent by a STA, where the pseudo access information is used for enabling the AP to determine that access initiated by the STA is pseudo access, the STA is not an authorized user of the AP, and the pseudo access is used for enabling an unauthorized user that accesses the AP to send a scheduling-related management frame to the AP and accept scheduling management by the AP.

It may be understood that, before the step of receiving, by an AP, pseudo access information sent by a STA, the STA needs to first find that the AP supports pseudo access, which may have multiple manners:
Optionally, the AP may send a broadcast frame, and indicate, in the broadcast frame, that the AP supports pseudo access.

Optionally, the AP may receive a probe request frame sent by the STA, where the probe request frame carries information indicating that an AP supporting pseudo access is searched for; and then, the AP sends a probe response frame to the AP, where the probe response frame indicates that the AP supports pseudo access.

202: The AP establishes a pseudo access association with the STA, so that the AP can receive a scheduling-related management frame sent by the STA and perform scheduling management on the STA.

After receiving the pseudo access information sent by the STA, the AP establishes a pseudo access association with the STA, so that the AP can receive a scheduling-related management frame sent by the STA and perform scheduling management on the STA.

In this embodiment of the present invention, after receiving pseudo access information sent by a STA, an AP establishes a pseudo access association with the STA, so that a STA that is not an authorized user of the AP can perform pseudo access to the AP, and accept scheduling management by the AP. Therefore, in a dense scenario, multiple STAs can be prevented from contending for a same spectrum resource, thereby improving channel use efficiency for communication between the STAs.

In the foregoing embodiment, the STA sends the pseudo access information to the AP, and in actual application, the pseudo access information may be sent to the AP in different phases of communication between the STA and the AP, so as to instruct to perform pseudo access. The pseudo access method in this embodiment of the present invention is separately described below by using interaction between the STA and the AP when the pseudo access information is sent in different phases.

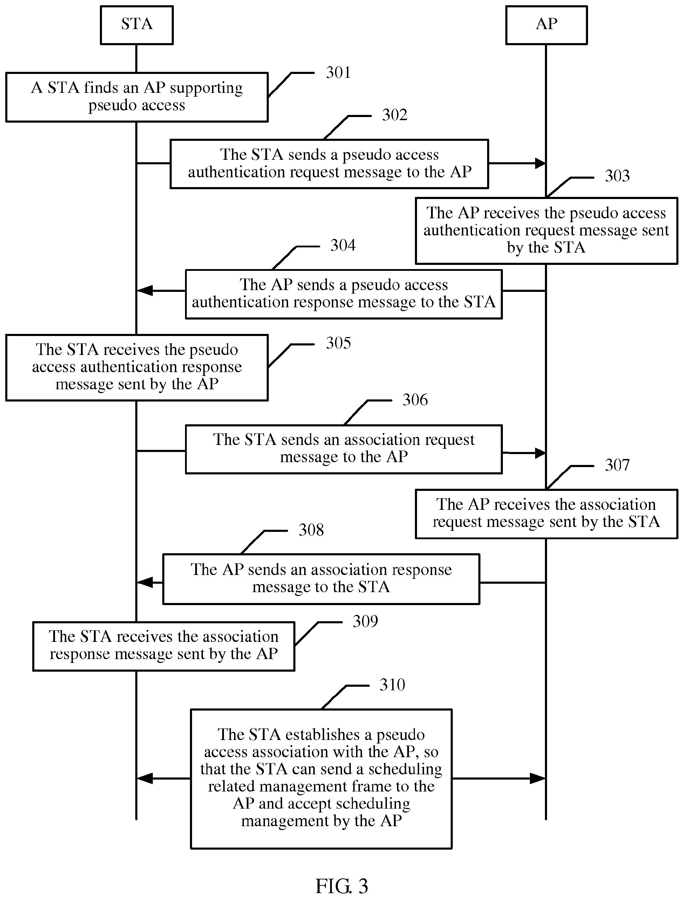

1. In an 802.11 authentication process, it is instructed that pseudo access is performed:
Referring to FIG. 3, another embodiment of a pseudo access method in the embodiments of the present invention includes the following steps.

301: A STA finds an AP supporting pseudo access.

This step is similar to step 101, and details are not described herein again.

302: The STA sends a pseudo access authentication request message to the AP.

After finding an AP supporting pseudo access, the STA sends a pseudo access authentication request message to the AP, where the pseudo access authentication request message is used for initiating a pseudo access authentication request to the AP, and includes an authentication type parameter indicating the pseudo access information.

Specifically, an 802.11 authentication message may indicate pseudo access authentication. In the existing 802.11 standard, an 802.11 authentication message carries an authentication type parameter to indicate a type of authentication performed. When a value of the authentication type parameter is 0, it indicates open system (Open System) authentication. When a value of the authentication type parameter is 1, it indicates shared key (Shared Key, that is, a same key is preset in the STA and the AP) authentication. When a value of the authentication type parameter is 2, it indicates fast transition (Fast Transition, that is, the STA fast switches from one AP to another AP) authentication. When a value of the authentication type parameter is 3, it indicates ad hoc synchronous authentication (used for ad hoc authentication between two neighboring nodes in a mesh network). In this step, on this basis, a definition may be added for the authentication type parameter, for example, when the value is 4, it indicates pseudo access authentication. Certainly, a new frame may also be defined to perform pseudo access 802.11 authentication. This is not limited herein.

303: The AP receives the pseudo access authentication request message sent by the STA.

After the STA sends the pseudo access authentication request message to the AP, the AP receives the pseudo access authentication request message sent by the STA, where the pseudo access authentication request message is used for initiating a pseudo access authentication request to the AP, and includes an authentication type parameter indicating the pseudo access information.

304: The AP sends a pseudo access authentication response message to the STA.

After the AP receives the pseudo access authentication request message sent by the STA, if the AP agrees on the pseudo access authentication request, the AP may send the pseudo access authentication response message to the STA, where the pseudo access authentication response message is a response to the pseudo access authentication request message, and is used for determining that the AP accepts the pseudo access authentication request sent by the STA.

305: The STA receives the pseudo access authentication response message sent by the AP.

After the AP sends the pseudo access authentication response to the STA, the STA receives the pseudo access authentication response message sent by the AP, where the pseudo access authentication response message is a response to the pseudo access authentication request message, and is used for determining that the AP accepts the pseudo access authentication request sent by the STA.

306: The STA sends an association request message to the AP.

307: The AP receives the association request message sent by the STA.

308: The AP sends an association response message to the STA.

309: The STA receives the association response message sent by the AP.

The association response message may carry an association identifier that is allocated by the AP to the STA.

It should be noted that, step 306 and step 309 are similar to implementation in an existing standard, and an only difference is that the AP can determine that 802.11 authentication performed in step 303 to step 305 is pseudo access authentication. In this case, actually, pseudo access is completed after an 802.11 association is established in step 307 and step 308.

310: The STA and the AP establish a pseudo access association, so that the STA can send a scheduling-related management frame to the AP and accept scheduling management by the AP.

The AP sends the association response message to the STA, and after the STA receives the association response message, all conditions for establishing a pseudo access association are already satisfied. In this case, the STA establishes a pseudo access association with the AP, so that the STA can send a scheduling-related management frame to the AP and accept scheduling management by the AP.

In this embodiment of the present invention, a pseudo access message is added to a pseudo access authentication request message in an 802.11 authentication process, and an existing standard only needs to be modified slightly to implement pseudo access, without adding more unnecessary steps, thereby improving efficiency of performing pseudo access by a STA to an AP.

It may be understood that, in the embodiment corresponding to FIG. 3, step 301, step 302, step 305, step 306, step 309, and step 310 are steps performed by the STA as an execution body to implement the pseudo access method. Step 303, step 304, step 307, step 308, and step 310 are steps performed by the AP as an execution body to implement the pseudo access method.

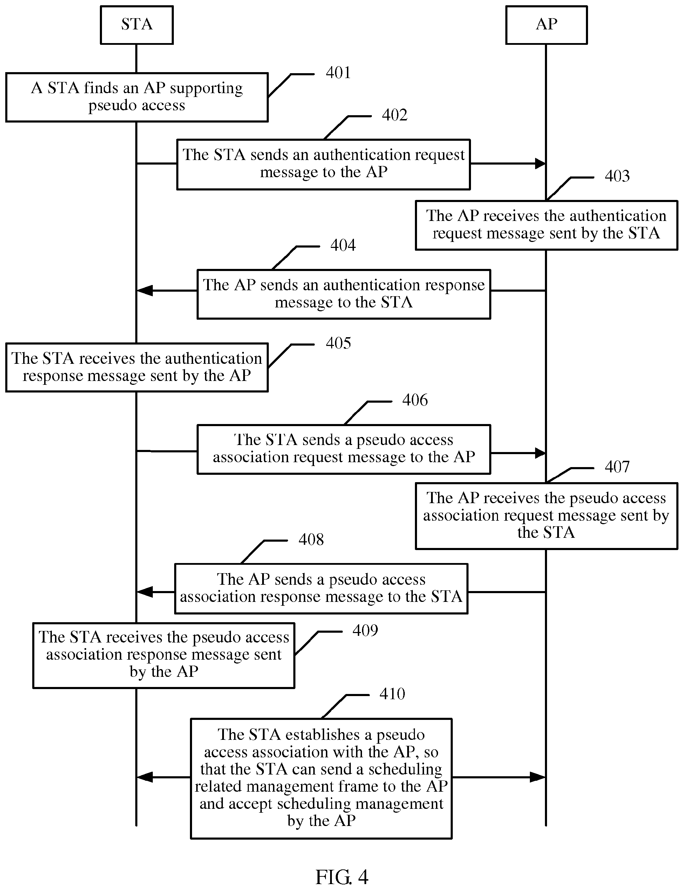

2. In an 802.11 association process, it is instructed that pseudo access is performed:
Referring to FIG. 4, another embodiment of a pseudo access method in the embodiments of the present invention includes the following steps.

401: A STA finds an AP supporting pseudo access.

This step is similar to step 101, and details are not described herein again.

402: The STA sends an authentication request message to the AP.

403: The AP receives the authentication request message sent by the STA.

404: The AP sends an authentication response message to the STA.

405: The STA receives the authentication response message sent by the AP.

It should be noted that, step 402 and step 405 are similar to implementation in an existing standard. Specifically, an authentication frame in the existing 802.11 standard may be not modified.

406: The STA sends a pseudo access association request message to the AP.

After receiving the authentication response message sent by the AP, the STA may send a pseudo access association request message to the AP, where the pseudo access association request message is used for initiating a pseudo access association request to the AP, and includes an information indication indicating pseudo access information.

Specifically, an association request frame defined in the 802.11 may be used, and an information indication is added to the association request frame to indicate that the association request frame is a pseudo access association request. A specific indication manner may be adding an information element, and existence of the information element indicates that the STA requests a pseudo access association. For the information element, refer to the 802.11 standard text, and details are not described herein. In addition, a manner of adding pseudo access indication information is not limited to a manner of using an information element; and a new frame may also be additionally defined as a pseudo access association request. This is not limited herein.

407: The AP receives the pseudo access association request message sent by the STA.

After the STA sends the pseudo access association request message to the AP, the AP receives the pseudo access association request message sent by the STA, where the pseudo access association request message is used for initiating a pseudo access association request to the AP, and includes an information indication indicating the pseudo access information.

408: The AP sends a pseudo access association response message to the STA.

After the AP receives the pseudo access association request message sent by the STA, if the AP agrees on the pseudo access association request, the AP sends the pseudo access association response message to the STA, where the pseudo access association response message is a response to the pseudo access association request message, and is used for determining that the AP accepts the pseudo access association request sent by the STA.

409: The STA receives the pseudo access association response message sent by the AP.

After the AP sends the pseudo access association response message to the STA, the STA receives the pseudo access association response message sent by the AP, where the pseudo access association response message is a response to the pseudo access association request message, and is used for determining that the AP accepts the pseudo access association request sent by the STA.

410: The STA and the AP establish a pseudo access association, so that the STA can send a scheduling-related management frame to the AP and accept scheduling management by the AP.

This step is similar to step 310, and details are not described herein again.

In this embodiment of the present invention, a pseudo access message is added to a pseudo access association request message in an 802.11 association process, and an existing standard only needs to be modified slightly to implement pseudo access, without adding more unnecessary steps, thereby improving efficiency of performing pseudo access by a STA to an AP.

It may be understood that, in the embodiment corresponding to FIG. 4, step 401, step 402, step 405, step 406, step 409, and step 410 are steps performed by the STA as an execution body to implement the pseudo access method. Step 403, step 404, step 407, step 408, and step 410 are steps performed by the AP as an execution body to implement the pseudo access method.

A direct connection scheduling method for pseudo access in an embodiment of the present invention is described below.

1. A first STA is used as an execution body.

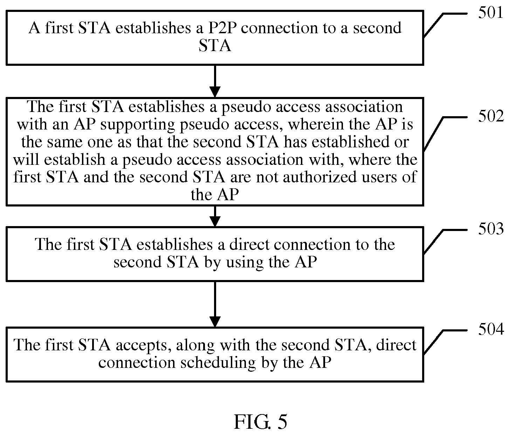

Referring to FIG. 5, an embodiment of a direct connection scheduling method for pseudo access in the embodiments of the present invention includes the following steps.

501: A first STA establishes a P2P connection to a second STA.

The first STA establishes a P2P connection to the second STA for communication. A process of establishing the P2P connection is not described in detail herein. The first STA and the second STA negotiate a key of the P2P connection in the process of establishing the P2P connection, and communication between the first STA and the second STA is protected by the key.

502: The first STA establishes, a pseudo access association with an AP supporting pseudo access, wherein the AP is the same one as that the second STA has established or will establish a pseudo access association with, where the first STA and the second STA are not authorized users of the AP.

When a communication environment is crowded, the first STA establishes a pseudo access association with an AP supporting pseudo access, wherein the AP is the same one as that the second STA has established or will establish a pseudo access association with, where the first STA and the second STA are not authorized users of the AP. It may be understood that, the AP supports pseudo access, and the AP also supports direct connection scheduling. For the step of establishing a pseudo access association, refer to the pseudo access method in the embodiments of the present invention, and details are not described herein again.

503: The first STA establishes a direct connection to the second STA by using the AP.

After the first STA and the second STA perform pseudo access to the same AP, the first STA establishes a direct connection to the second STA by using the AP.

504: The first STA accepts, along with the second STA, direct connection scheduling by the AP.

After the first STA establishes the direct connection to the second STA by using the AP, the first STA and the second STA accept direct connection scheduling by the AP.

In this embodiment of the present invention, in a dense scenario, a first STA and a second STA that has established a P2P connection can perform pseudo access to an AP, and accept direct connection scheduling by the AP, so as to prevent a collision when a P2P user and an AP user contend for a same channel resource, and improve channel efficiency in the dense scenario.

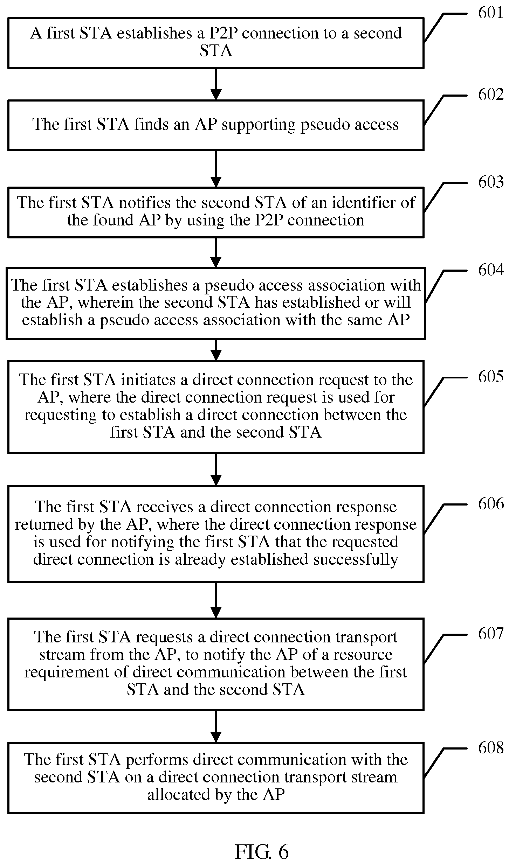

The direct connection scheduling method for pseudo access in this embodiment of the present invention is described in detail below. Referring to FIG. 6, another embodiment of a direct connection scheduling method for pseudo access in the embodiments of the present invention includes the following steps.

601: A first STA establishes a P2P connection to a second STA.

This step is similar to step 501, and details are not described herein again.

602: The first STA finds an AP supporting pseudo access.

The first STA finds that an environment is crowded and a communication effect is poor, and therefore searches for an AP supporting pseudo access. For a process of searching for an AP, refer to the pseudo access method in the embodiments of the present invention, and details are not described herein again. Certainly, the AP supporting pseudo access herein actually also supports direct connection scheduling.

603: The first STA notifies the second STA of an identifier of the found AP by using the P2P connection.

The first STA finds the AP supporting pseudo access, and notifies the second STA of the identifier of the AP by using the P2P connection, so that the second STA also performs pseudo access to the AP. Specifically, the second STA may also initiatively find such an AP, and may notify the first STA of the found AP supporting pseudo access. APs respectively found by the first STA and the second STA may be not the same; therefore, the first STA and the second STA further need to negotiate an AP to access together. This is not limited herein.

604: The first STA establishes a pseudo access association with the AP, wherein the second STA has established or will establish a pseudo access association with the same AP.

After the second STA obtains the AP supporting pseudo access that is found by the first STA, both the first STA and the second STA establish a pseudo access association with the AP.

605: The first STA initiates a direct connection request to the AP, where the direct connection request is used for requesting to establish a direct connection between the first STA and the second STA.

After both the first STA and the second STA establish the pseudo access association with the AP, the first STA initiates a direct connection request to the AP, where the direct connection request is used for requesting to establish a direct connection between the first STA and the second STA. That is, the direct connection request sent by the first STA indicates that a direct connection object is the second STA.

606: The first STA receives a direct connection response returned by the AP, where the direct connection response is used for notifying the first STA that the requested direct connection is already established successfully.

After the first STA sends the direct connection request, the first STA receives a direct connection response returned by the AP, where the direct connection response is used for notifying the first STA that the requested direct connection is already established successfully.

607: The first STA requests a direct connection transport stream from the AP, to notify the AP of a resource requirement of direct communication between the first STA and the second STA.

After the direct connection is established between the first STA and the second STA, the first STA requests a direct connection transport stream from the AP, to notify the AP of a resource requirement of direct communication between the first STA and the second STA.

In an existing standard, after a direct connection is established successfully, a first STA should initiate an SMK (STA to STA link Master Key, master key of a direct link) handshake process to enable two parties of the direct connection to obtain an SMK. However, in a pseudo access process, a STA and an AP do not perform a security authentication process for authentication; therefore, there is no temporary key between the first STA and the AP, message exchange is not protected, and the SMK cannot be securely sent to the first STA and a second STA. Consequently, SMK handshake cannot be performed, and further, 4-way STK handshake, based on the SMK, between the first STA and the second STA cannot be performed either. Because the AP knows that the first STA and the second STA perform pseudo access to the AP, the AP allows the first STA and the second STA to perform a subsequent operation without performing SMK handshake after a direct connection is established between the first STA and the second STA.

608: The first STA performs direct communication with the second STA on a direct connection transport stream allocated by the AP.

After the first STA requests the direct connection transport stream from the AP, the first STA performs direct communication with the second STA on the direct connection transport stream allocated by the AP.

It may be understood that, when the first STA performs direct communication with the second STA on the direct connection transport stream, protection may be provided by using a key of the P2P connection.

In this embodiment of the present invention, in a dense scenario, a first STA and a second STA that has established a P2P connection can perform pseudo access to an AP, and accept direct connection scheduling by the AP, so as to prevent a collision when a P2P user and an AP user contend for a same channel resource, and improve channel efficiency in the dense scenario.

2. An AP is used as an execution body.

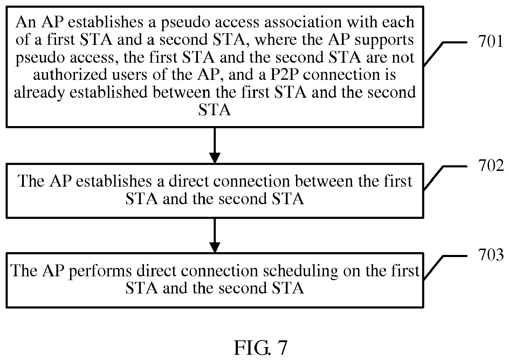

Referring to FIG. 7, another embodiment of a direct connection scheduling method for pseudo access in the embodiments of the present invention includes the following steps.

701: An AP establishes a pseudo access association with each of a first STA and a second STA, where the AP supports pseudo access, the first STA and the second STA are not authorized users of the AP, and a P2P connection is already established between the first STA and the second STA.

702: The AP establishes a direct connection between the first STA and the second STA.

703: The AP performs direct connection scheduling on the first STA and the second STA.

In this embodiment of the present invention, in a dense scenario, a first STA and a second STA that has established a P2P connection can perform pseudo access to an AP, and accept direct connection scheduling by the AP, so as to prevent a collision when a P2P user and an AP user contend for a same channel resource, and improve channel efficiency in the dense scenario.

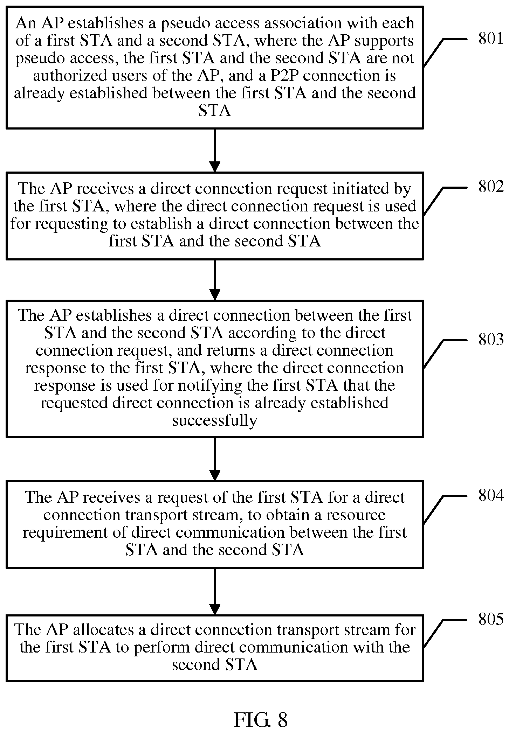

The direct connection scheduling method for pseudo access in this embodiment of the present invention is described in detail below. Referring to FIG. 8, another embodiment of a pseudo access scheduling method in the embodiments of the present invention includes the following steps.

801: An AP establishes a pseudo access association with each of a first STA and a second STA, where the AP supports pseudo access, the first STA and the second STA are not authorized users of the AP, and a P2P connection is already established between the first STA and the second STA.

802: The AP receives a direct connection request initiated by the first STA, where the direct connection request is used for requesting to establish a direct connection between the first STA and the second STA.

803: The AP establishes a direct connection between the first STA and the second STA according to the direct connection request, and returns a direct connection response to the first STA, where the direct connection response is used for notifying the first STA that the requested direct connection is already established successfully.

804: The AP receives a request of the first STA for a direct connection transport stream, to obtain a resource requirement of direct communication between the first STA and the second STA.

805: The AP allocates a direct connection transport stream for the first STA to perform direct communication with the second STA.

In this embodiment of the present invention, in a dense scenario, a first STA and a second STA that has established a P2P connection can perform pseudo access to an AP, and accept direct connection scheduling by the AP, so as to prevent a collision when a P2P user and an AP user contend for a same channel resource, and improve channel efficiency in the dense scenario.

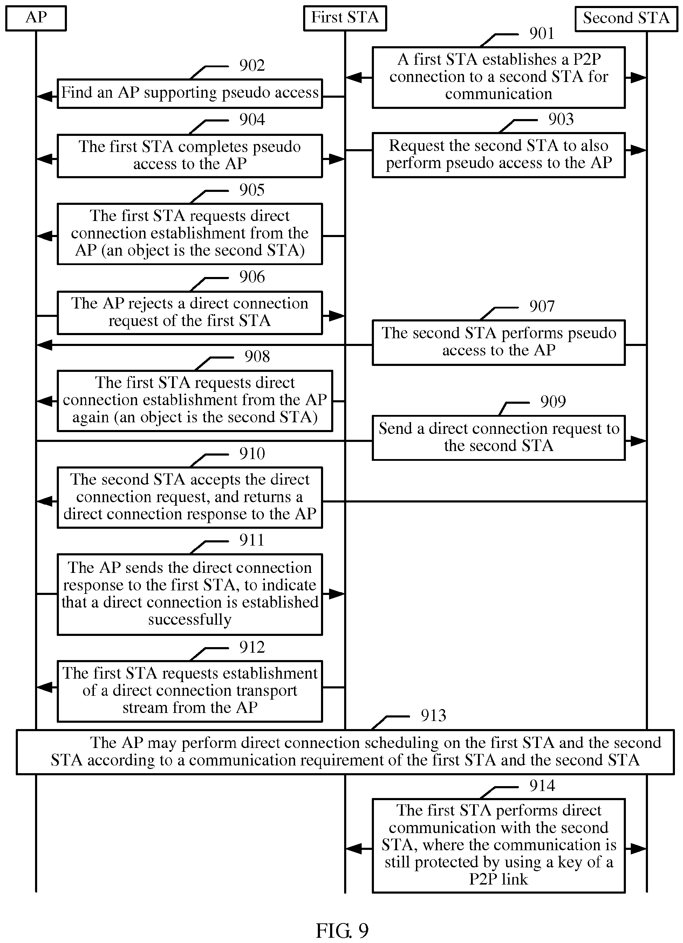

The pseudo access scheduling method in this embodiment of the present invention is described below by using interaction between the first STA and the second STA and the AP. Referring to FIG. 9, another embodiment of pseudo access scheduling method in the embodiments of the present invention includes the following steps.

901: A first STA establishes a P2P connection to a second STA for communication. The first STA and the second STA negotiate a key of the P2P connection in the process of establishing the P2P connection, and communication between the first STA and the second STA is protected by the key.

902: The first STA finds that an environment is crowded and a communication effect is poor, and therefore finds an AP supporting pseudo access. Certainly, the AP supporting pseudo access herein actually also supports direct connection scheduling; otherwise, it is meaningless for a STA to perform pseudo access to the AP.

903: The first STA finds the AP supporting pseudo access, and notifies the second STA of the information. This means that the second STA is requested to also perform pseudo access to the AP. Specifically, the second STA may also initiatively find such an AP, and may notify the first STA of the found AP supporting pseudo access. APs respectively found by the first STA and the second STA may be not the same; therefore, the first STA and the second STA further need to negotiate an AP to access together.

904: The first STA completes pseudo access to the AP.

905: The first STA requests direct connection establishment from the AP, where a direct connection object is the second STA.

906: If the second STA has not accessed the AP at this time, the AP rejects the direct connection request of the first STA.

907: The second STA performs pseudo access to the AP.

908: The first STA requests direct connection establishment from the AP again later, where a direct connection object is the second STA.

909: The AP accepts the direct connection request, and sends the direct connection request to the second STA, to indicate that a direct connection object is the first STA.

910: The second STA accepts the direct connection request, and returns a direct connection response to the AP.

911: The AP sends the direct connection response to the first STA, to indicate that a direct connection is established successfully.

In an existing standard, after a direct connection is established successfully, a first STA should initiate an SMK handshake process to enable two parties of the direct connection to obtain an SMK. However, in a pseudo access process, a STA and an AP do not perform a security authentication process for authentication; therefore, there is no temporary key between the first STA and the AP, message exchange is not protected, and the SMK cannot be securely sent to the first STA and a second STA. Consequently, SMK handshake cannot be performed, and further, 4-way STK handshake, based on the SMK, between the first STA and the second STA cannot be performed either. Because the AP knows that the first STA and the second STA perform pseudo access to the AP, the AP allows the first STA and the second STA to perform a subsequent operation without performing SMK handshake after a direct connection is established between the first STA and the second STA.

912: The first STA requests establishment of a direct connection transport stream from the AP, so that the AP knows a resource requirement of direct communication between the first STA and the second STA.

913: The AP may schedule the first STA and the second STA according to a communication requirement of the first STA and the second STA, thereby improving channel use efficiency in a dense environment.

914: The first STA performs direct communication with the second STA, where the communication is still protected by using a key of a P2P link. Therefore, even if there is no STK handshake, communication between the first STA and the second STA is still secure.

A STA for pseudo access in an embodiment of the present invention is described below.

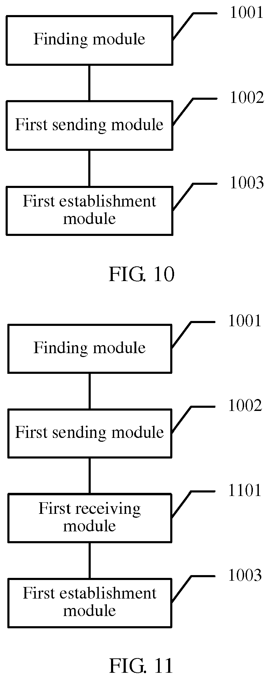

Referring to FIG. 10, an embodiment of a STA in the embodiments of the present invention includes:
a finding module 1001, configured to find an access point AP supporting pseudo access, where the STA is not an authorized user of the AP, and the pseudo access is used for enabling an unauthorized user that accesses the AP to send a scheduling-related management frame to the AP and accept scheduling management by the AP;
a first sending module 1002, configured to send pseudo access information to the AP, where the pseudo access information is used by the AP to determine that access initiated by the STA is pseudo access; and
a first establishment module 1003, configured to establish a pseudo access association with the AP, so that the STA can send a scheduling-related management frame to the AP and accept scheduling management by the AP.

In this embodiment of the present invention, after the finding module 1001 finds an AP supporting pseudo access, the first sending module 1002 sends pseudo access information to the AP, and the first establishment module 1003 establishes a pseudo access association with the AP, so that a STA that is not an authorized user of the AP can perform pseudo access to the AP, and accept scheduling management by the AP. Therefore, in a dense scenario, multiple STAs can be prevented from contending for a same spectrum resource, thereby improving channel use efficiency for communication between the STAs.

In the foregoing embodiment, the finding module 1001 may include multiple different units to find an access point AP supporting pseudo access:

Optionally, in another embodiment of the STA in this embodiment of the present invention, the finding module 1001 may specifically include:
a listening unit, configured to listen for a broadcast frame that is sent by an AP and that can be received; and
a determining unit, configured to: when a broadcast frame that is sent by a first AP and that is obtained by the listening unit by listening indicates that the first AP supports pseudo access, determine that the first AP is the AP supporting pseudo access.

Optionally, in another embodiment of the STA in this embodiment of the present invention, the finding module 1001 may specifically include:
a probe sending unit, configured to: send a probe request frame, and add, to the probe request frame, information indicating that an AP supporting pseudo access is searched for; and
a response receiving unit, configured to receive a probe response frame sent by a second AP, where the probe response frame indicates that the second AP is the AP supporting pseudo access.

In the foregoing embodiment, the first sending module 1002 may also send the pseudo access information to the AP in multiple different manners:

Optionally, in another embodiment of the STA in the embodiments of the present invention, referring to FIG. 11, the first sending module 1002 may be specifically configured to send a pseudo access association request message to the AP, where the pseudo access association request message is used for initiating a pseudo access association request to the AP, and includes an information indication indicating the pseudo access information. The STA may further include: a first receiving module 1101, configured to: before the pseudo access association is established with the AP, receive a pseudo access association response message sent by the AP, where the pseudo access association response message is a response to the pseudo access association request message, and is used for determining that the AP accepts the pseudo access association request sent by the STA.

In this embodiment of the present invention, the first sending module 1002 adds a pseudo access message to a pseudo access authentication request message in an 802.11 authentication process, and an existing standard only needs to be modified slightly to implement pseudo access, without adding more unnecessary steps, thereby improving efficiency of performing pseudo access by a STA to an AP.

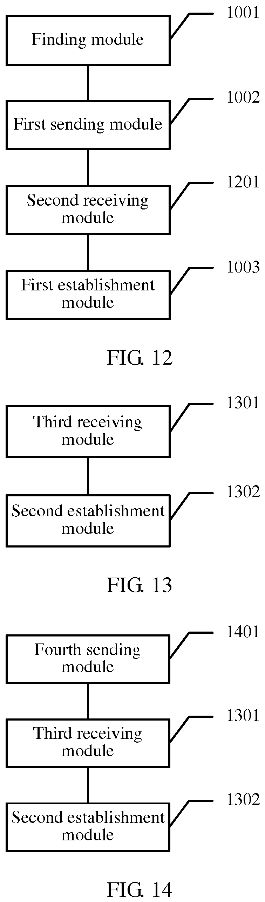

Optionally, in another embodiment of the STA in the embodiments of the present invention, referring to FIG. 12, the first sending module 1002 may be specifically configured to send a pseudo access authentication request message to the AP, where the pseudo access authentication request message is used for initiating a pseudo access authentication request to the AP, and includes an authentication type parameter indicating the pseudo access information. The STA may further include: a second receiving module 1201, configured to: before the pseudo access association is established with the AP, receive a pseudo access authentication response message sent by the AP, where the pseudo access authentication response message is a response to the pseudo access authentication request message, and is used for determining that the AP accepts the pseudo access authentication request sent by the STA.

In this embodiment of the present invention, the first sending module 1002 adds a pseudo access message to a pseudo access authentication request message in an 802.11 authentication process, and an existing standard only needs to be modified slightly to implement pseudo access, without adding more unnecessary steps, thereby improving efficiency of performing pseudo access by a STA to an AP.

An AP for pseudo access in an embodiment of the present invention is described below.

Referring to FIG. 13, an embodiment of an AP in the embodiments of the present invention includes:
a third receiving module 1301, configured to receive pseudo access information sent by a STA, where the pseudo access information is used for enabling the AP to determine that access initiated by the STA is pseudo access, the STA is not an authorized user of the AP, the AP supports pseudo access, and the pseudo access is used for enabling an unauthorized user that accesses the AP to send a scheduling-related management frame to the AP and accept scheduling management by the AP; and
a second establishment module 1302, configured to establish a pseudo access association with the STA, so that the AP can receive a scheduling-related management frame sent by the STA and perform scheduling management on the STA.

In this embodiment of the present invention, after the third receiving module 1301 receives pseudo access information sent by a STA, the second establishment module 1302 establishes a pseudo access association with the STA, so that a STA that is not an authorized user of the AP can perform pseudo access to the AP, and accept scheduling management by the AP. Therefore, in a dense scenario, multiple STAs can be prevented from contending for a same spectrum resource, thereby improving channel use efficiency for communication between the STAs.

In the foregoing embodiment, before the third receiving module 1301 receives the pseudo access information sent by the STA, the STA needs to first find the AP. This may be implemented in multiple manners.

Optionally, in another embodiment of the AP in the embodiments of the present invention, referring to FIG. 14, the AP further includes:
a fourth sending module 1401, configured to: before the pseudo access information sent by the STA is received, send a broadcast frame, and indicate, in the broadcast frame, that the AP supports pseudo access.

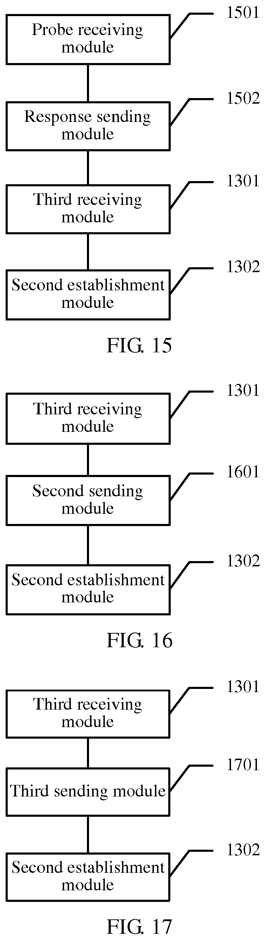

Optionally, in another embodiment of the AP in the embodiments of the present invention, referring to FIG. 15, the AP further includes:
a probe receiving module 1501, configured to receive a probe request frame sent by the STA, where the probe request frame carries information indicating that an AP supporting pseudo access is searched for; and
a response sending module 1502, configured to send a probe response frame to the STA, where the probe response frame indicates that the AP supports pseudo access.

In the foregoing embodiment, the third receiving module 1301 may receive, in multiple different manners, the pseudo access information sent by the STA:

Optionally, in another embodiment of the AP in the embodiments of the present invention, referring to FIG. 16, the third receiving module 1301 is specifically configured to receive a pseudo access association request message sent by the STA, where the pseudo access association request message is used for initiating a pseudo access association request to the AP, and includes an information indication indicating the pseudo access information. The AP further includes: a second sending module 1601, configured to: before the pseudo access association is established with the STA, send a pseudo access association response message to the STA, where the pseudo access association response message is a response to the pseudo access association request message, and is used for determining that the AP accepts the pseudo access association request sent by the STA.

In this embodiment of the present invention, the third receiving module 1301 receives a pseudo access message that is carried in a pseudo access authentication request message in an 802.11 authentication process, and an existing standard only needs to be modified slightly to implement pseudo access, without adding more unnecessary steps, thereby improving efficiency of performing pseudo access by a STA to an AP.

Optionally, in another embodiment of the AP in the embodiments of the present invention, referring to FIG. 17, the third receiving module 1301 is specifically configured to receive a pseudo access authentication request message sent by the STA, where the pseudo access authentication request message is used for initiating a pseudo access authentication request to the AP, and includes an authentication type parameter indicating the pseudo access information. The AP further includes: a third sending module 1701, configured to: before the pseudo access association is established with the STA, send a pseudo access authentication response message to the STA, where the pseudo access authentication response message is a response to the pseudo access authentication request message, and is used for determining that the AP accepts the pseudo access authentication request sent by the STA.

In this embodiment of the present invention, the third receiving module 1301 receives a pseudo access message that is carried in a pseudo access authentication request message in an 802.11 authentication process, and an existing standard only needs to be modified slightly to implement pseudo access, without adding more unnecessary steps, thereby improving efficiency of performing pseudo access by a STA to an AP.

A STA for direct connection scheduling for pseudo access in an embodiment of the present invention is described below.

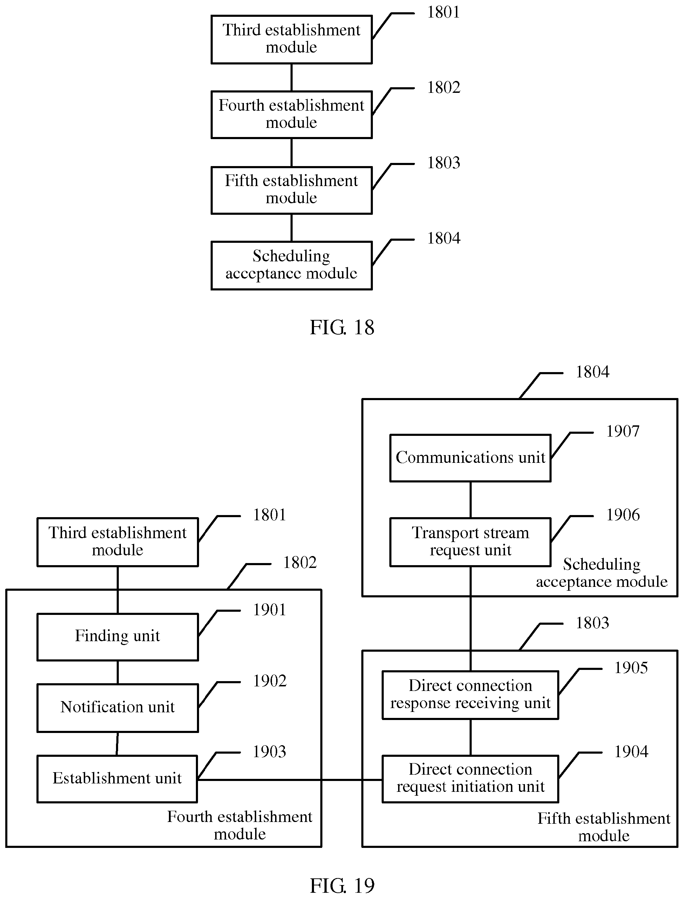

Referring to FIG. 18, an embodiment of a STA used as a first STA in the embodiments of the present invention includes:
a third establishment module 1801, configured to establish a P2P connection to a second STA;
a fourth establishment module 1802, configured to establish, a pseudo access association with an AP supporting pseudo access, wherein the AP is the same one as that the second STA has established or will establish a pseudo access association with, where the first STA and the second STA are not authorized users of the AP;
a fifth establishment module 1803, configured to establish a direct connection to the second STA by using the AP; and
a scheduling acceptance module 1804, configured to accept direct connection scheduling by the AP along with the second STA.

In this embodiment of the present invention, the third establishment module 1801 establishes a P2P connection to a second STA, in a dense scenario, the fourth establishment module 1802 performs pseudo access to an AP, and the scheduling acceptance module 1804 accepts direct connection scheduling by the AP, so as to prevent a collision when a P2P user and an AP user contend for a same channel resource, and improve channel efficiency in the dense scenario.

In the foregoing embodiment, the fourth establishment module 1802 establishes, a pseudo access association with an AP supporting pseudo access, wherein the AP is the same one as that the second STA has established or will establish a pseudo access association with. In actual application, the first STA that finds the AP supporting pseudo access may send an identifier of the AP to the second STA. Referring to FIG. 19, in another embodiment of the STA in the embodiments of the present invention, the fourth establishment module 1802 specifically includes:
a finding unit 1901, configured to find the AP supporting pseudo access;
a notification unit 1902, configured to notify the second STA of an identifier of the found AP by using the P2P connection; and
an establishment unit 1903, configured to establish, a pseudo access association with the AP, wherein the second STA has established or will establish a pseudo access association with the same AP.

Optionally, the fifth establishment module 1803 may specifically include:
a direct connection request initiation unit 1904, configured to initiate a direct connection request to the AP, where the direct connection request is used for requesting to establish a direct connection between the first STA and the second STA; and
a direct connection response receiving unit 1905, configured to receive a direct connection response returned by the AP, where the direct connection response is used for notifying the first STA that the requested direct connection is already established successfully.

Optionally, the scheduling acceptance module 1804 may specifically include:
a transport stream request unit 1906, configured to request a direct connection transport stream from the AP, to notify the AP of a resource requirement of direct communication between the first STA and the second STA; and
a communications unit 1907, configured to perform direct communication with the second STA on a direct connection transport stream allocated by the AP.

Optionally, the communications unit 1907 may be specifically configured to: perform direct communication with the second STA on the direct connection transport stream allocated by the AP, and provide protection by using a key of the P2P connection.

In this embodiment of the present invention, the third establishment module 1801 establishes a P2P connection to a second STA, in a dense scenario, the fourth establishment module 1802 performs pseudo access to an AP, and the scheduling acceptance module 1804 accepts direct connection scheduling by the AP, so as to prevent a collision when a P2P user and an AP user contend for a same channel resource, and improve channel efficiency in the dense scenario.

An AP for direct connection scheduling for pseudo access in an embodiment of the present invention is described below.

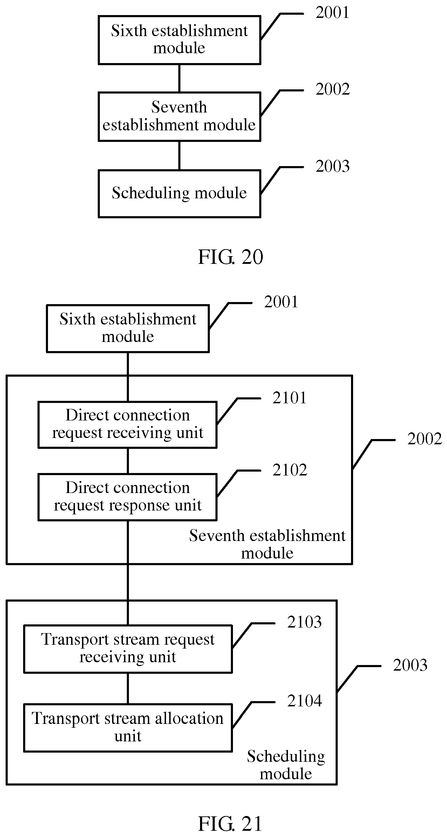

Referring to FIG. 20, another embodiment of an AP in the embodiments of the present invention includes:
a sixth establishment module 2001, configured to establish a pseudo access association with each of a first STA and a second STA, where the AP supports pseudo access, the first STA and the second STA are not authorized users of the AP, and a P2P connection is already established between the first STA and the second STA;
a seventh establishment module 2002, configured to establish a direct connection between the first STA and the second STA; and
a scheduling module 2003, configured to perform direct connection scheduling on the first STA and the second STA.

In this embodiment of the present invention, the sixth establishment module 2001 establishes a pseudo access association with a first STA and a second STA that has established a P2P connection, and in a dense scenario, the seventh establishment module 2002 establishes a direct connection between the first STA and the second STA, so that the first STA and the second STA accept direct connection scheduling of an AP, so as to prevent a collision when a P2P user and an AP user contend for a same channel resource, and improve channel efficiency in the dense scenario.

The AP for direct connection scheduling for pseudo access in this embodiment of the present invention is described in detail below. Referring to FIG. 21, in another embodiment of the AP in the embodiments of the present invention, the seventh establishment module 2002 specifically includes:
a direct connection request receiving unit 2101, configured to receive a direct connection request initiated by the first STA, where the direct connection request is used for requesting to establish a direct connection between the first STA and the second STA; and
a direct connection request response unit 2102, configured to: establish a direct connection between the first STA and the second STA according to the direct connection request, and return a direct connection response to the first STA, where the direct connection response is used for notifying the first STA that the requested direct connection is already established successfully.

The scheduling module 2003 specifically includes:
a transport stream request receiving unit 2103, configured to receive a request of the first STA for a direct connection transport stream, to obtain a resource requirement of direct communication between the first STA and the second STA; and
a transport stream allocation unit 2104, configured to allocate a direct connection transport stream for the first STA to perform direct communication with the second STA.

In this embodiment of the present invention, the sixth establishment module 2001 establishes a pseudo access association with a first STA and a second STA that has established a P2P connection, and in a dense scenario, the seventh establishment module 2002 establishes a direct connection between the first STA and the second STA, so that the first STA and the second STA accept direct connection scheduling of an AP, so as to prevent a collision when a P2P user and an AP user contend for a same channel resource, and improve channel efficiency in the dense scenario.

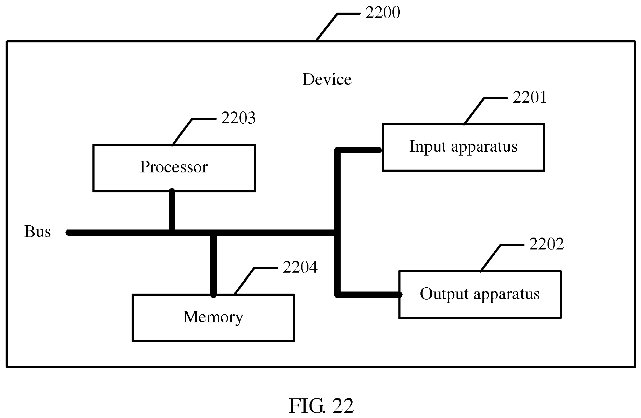

Referring to FIG. 22, FIG. 22 is structural diagram of a device according to an embodiment of the present invention. A STA or an AP in this embodiment of the present invention may use a structure of the device. The device 2200 includes:
an input apparatus 2201, an output apparatus 2202, a processor 2203, and a memory 2204 (there may be one or more processors 2203 in the device 2200, and in FIG. 22, one processor 2203 is used as an example). In some embodiments of the present invention, the input apparatus 2201, the output apparatus 2202, the processor 2203, and the memory 2204 may be connected by using a bus or in another manner, and a connection by using a bus is used as an example in FIG. 22.

1. When the device 2200 is used as a STA for pseudo access, in another embodiment of the STA in this embodiment of the present invention, the processor 2203 is configured to perform the following steps by invoking an operation instruction stored in the memory 2204:
finding an access point AP supporting pseudo access, where the STA is not an authorized user of the AP, and the pseudo access is used for enabling an unauthorized user that accesses the AP to send a scheduling-related management frame to the AP and accept scheduling management by the AP;
sending pseudo access information to the AP, where the pseudo access information is used by the AP to determine that access initiated by the STA is pseudo access; and
establishing a pseudo access association with the AP, so that the STA can send a scheduling-related management frame to the AP and accept scheduling management by the AP.

In some embodiments of the present invention, when performing the step of sending pseudo access information to the AP, the processor 2203 specifically performs the following step:
sending a pseudo access association request message to the AP, where the pseudo access association request message is used for initiating a pseudo access association request to the AP, and includes an information indication indicating the pseudo access information; and
before performing the step of establishing a pseudo access association with the AP, the processor is further configured to perform the following step:
   receiving a pseudo access association response message sent by the AP, where the pseudo access association response message is a response to the pseudo access association request message, and is used for determining that the AP accepts the pseudo access association request sent by the STA.

In some embodiments of the present invention, when performing the step of sending pseudo access information to the AP, the processor 2203 specifically performs the following step:
sending a pseudo access authentication request message to the AP, where the pseudo access authentication request message is used for initiating a pseudo access authentication request to the AP, and includes an authentication type parameter indicating the pseudo access information; and
before performing the step of establishing a pseudo access association with the AP, the processor is further configured to perform the following step:
   receiving a pseudo access authentication response message sent by the AP, where the pseudo access authentication response message is a response to the pseudo access authentication request message, and is used for determining that the AP accepts the pseudo access authentication request sent by the STA.

In some embodiments of the present invention, when performing the step of finding an access point AP supporting pseudo access, the processor 2203 specifically performs the following steps:
listening for a broadcast frame that is sent by an AP and that can be received; and
when a broadcast frame that is sent by a first AP and that is obtained by listening indicates that the first AP supports pseudo access, determining that the first AP is the AP supporting pseudo access.

In some embodiments of the present invention, when performing the step of finding an access point AP supporting pseudo access, the processor 2203 specifically performs the following steps:
sending a probe request frame including information indicating that an AP supporting pseudo access is searched for; and
receiving a probe response frame sent by a second AP, where the probe response frame indicates that the second AP is the AP supporting pseudo access.

2. When the device 2200 is used as an AP for pseudo access, in another embodiment of the AP in this embodiment of the present invention, the processor 2203 is configured to perform the following steps by invoking an operation instruction stored in the memory 2204:
receiving pseudo access information sent by a STA, where the pseudo access information is used for enabling the AP to determine that access initiated by the STA is pseudo access, the STA is not an authorized user of the AP, the AP supports pseudo access, and the pseudo access is used for enabling an unauthorized user that accesses the AP to send a scheduling-related management frame to the AP and accept scheduling management by the AP; and
establishing a pseudo access association with the STA, so that the AP can receive a scheduling-related management frame sent by the STA and perform scheduling management on the STA.

In some embodiments of the present invention, when performing the step of receiving pseudo access information sent by a STA, the processor 2203 specifically performs the following step:
receiving a pseudo access association request message sent by the STA, where the pseudo access association request message is used for initiating a pseudo access association request to the AP, and includes an information indication indicating the pseudo access information; and
before performing the step of establishing a pseudo access association with the STA, the processor 2203 further performs the following step:
   sending a pseudo access association response message to the STA, where the pseudo access association response message is a response to the pseudo access association request message, and is used for determining that the AP accepts the pseudo access association request sent by the STA.

In some embodiments of the present invention, when performing the step of receiving pseudo access information sent by a STA, the processor 2203 specifically performs the following step:
receiving a pseudo access authentication request message sent by the STA, where the pseudo access authentication request message is used for initiating a pseudo access authentication request to the AP, and includes an authentication type parameter indicating the pseudo access information; and
before performing the step of establishing a pseudo access association with the STA, the processor 2203 further performs the following step:
   sending a pseudo access authentication response message to the STA, where the pseudo access authentication response message is a response to the pseudo access authentication request message, and is used for determining that the AP accepts the pseudo access authentication request sent by the STA.

In some embodiments of the present invention, before performing the step of receiving pseudo access information sent by a STA, the processor 2203 is further configured to perform the following step:
sending a broadcast frame, and indicating, in the broadcast frame, that the AP supports pseudo access.

In some embodiments of the present invention, before performing the step of receiving pseudo access information sent by a STA, the processor 2203 is further configured to perform the following step:
receiving a probe request frame sent by the STA, where the probe request frame carries information indicating that an AP supporting pseudo access is searched for; and
sending a probe response frame to the STA, where the probe response frame indicates that the AP supports pseudo access.

3. When the device 2200 is used as a STA for direct connection scheduling for pseudo access, in another embodiment of the STA in this embodiment of the present invention, the processor 2203 is configured to perform the following steps by invoking an operation instruction stored in the memory 2204:
establishing a P2P connection to a second STA;
establishing, a pseudo access association with an AP supporting pseudo access, wherein the AP is the same one as that the second STA has established or will establish a pseudo access association with, where the first STA and the second STA are not authorized users of the AP;
establishing a direct connection to the second STA by using the AP; and
accepting direct connection scheduling by the AP along with the second STA.

In some embodiments of the present invention, when performing the step of establishing, a pseudo access association with an AP supporting pseudo access, wherein the second STA has established or will establish a pseudo access association with the same AP, the processor 2203 is specifically configured to perform the following steps:
finding the AP supporting pseudo access;
notifying the second STA of an identifier of the found AP by using the P2P connection; and
establishing, a pseudo access association with the AP, wherein the second STA has established or will establish a pseudo access association with the same AP.

In some embodiments of the present invention, when performing the step of establishing a direct connection to the second STA by using the AP, the processor 2203 is specifically configured to perform the following steps:
initiating a direct connection request to the AP, where the direct connection request is used for requesting to establish a direct connection between the first STA and the second STA; and
receiving a direct connection response returned by the AP, where the direct connection response is used for notifying the first STA that the requested direct connection is already established successfully.

In some embodiments of the present invention, when performing the step of accepting direct connection scheduling by the AP along with the second STA, the processor 2203 is specifically configured to perform the following steps:
requesting a direct connection transport stream from the AP, to notify the AP of a resource requirement of direct communication between the first STA and the second STA; and
performing direct communication with the second STA on a direct connection transport stream allocated by the AP.

In some embodiments of the present invention, when performing the step of performing direct communication with the second STA on a direct connection transport stream allocated by the AP, the processor 2203 is specifically configured to perform the following step:
performing direct communication with the second STA on the direct connection transport stream allocated by the AP, and providing protection by using a key of the P2P connection.

4. When the device 2200 is used as an AP for direct connection scheduling for pseudo access, in another embodiment of the AP in this embodiment of the present invention, the processor 2203 is configured to perform the following steps by invoking an operation instruction stored in the memory 2204:
establishing a pseudo access association with each of a first STA and a second STA, where the AP supports pseudo access, the first STA and the second STA are not authorized users of the AP, and a P2P connection is already established between the first STA and the second STA;
establishing a direct connection between the first STA and the second STA; and
performing direct connection scheduling on the first STA and the second STA.

In some embodiments of the present invention, when performing the step of establishing a direct connection between the first STA and the second STA, the processor 2203 is specifically configured to perform the following steps:
receiving a direct connection request initiated by the first STA, where the direct connection request is used for requesting to establish a direct connection between the first STA and the second STA; and
establishing a direct connection between the first STA and the second STA according to the direct connection request, and returning a direct connection response to the first STA, where the direct connection response is used for notifying the first STA that the requested direct connection is already established successfully.

In some embodiments of the present invention, when performing the step of performing direct connection scheduling on the first STA and the second STA, the processor 2203 is specifically configured to perform the following steps:
receiving a request of the first STA for a direct connection transport stream, to obtain a resource requirement of direct communication between the first STA and the second STA; and
allocating a direct connection transport stream for the first STA to perform direct communication with the second STA.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments without departing from the scope of the appended claims of the present invention.

## Claims

1. A direct connection scheduling method for pseudo access, comprising:
establishing, by a first STA, a P2P connection to a second STA (501, 601);
establishing, by the first STA and the second STA, a pseudo access association with a same AP supporting pseudo access (502, 604), wherein the first STA and the second STA are not authorized users of the AP;
establishing, by the first STA, a direct connection to the second STA by using the AP 503; and **characterized by**
accepting, by the first STA and the second STA, direct connection scheduling by the AP (504).

2. The method according to claim 1, wherein the establishing, by the first STA and the second STA, a pseudo access association with a same AP supporting pseudo access specifically comprises:
finding, by the first STA, the AP supporting pseudo access (602);
notifying, by the first STA, the second STA of an identifier of the found AP by using the P2P connection (603); and
establishing, by both the first STA and the second STA, a pseudo access association with the AP (604).

3. A direct connection scheduling method for pseudo access, comprising:
establishing, by an AP, a pseudo access association with each of a first STA and a second STA, wherein the AP supports pseudo access, the first STA and the second STA are not authorized users of the AP, and a P2P connection is already established between the first STA and the second STA (701);
establishing, by the AP, a direct connection between the first STA and the second STA (702); and **characterized by**
performing, by the AP, direct connection scheduling on the first STA and the second STA (703).

4. A STA, used as a first STA, and comprising:
a third establishment module (1801), configured to establish a P2P connection to a second STA;
a fourth establishment module (1802), configured to establish a pseudo access association with an AP supporting pseudo access, wherein the AP is the same one as that the second STA has established or will establish a pseudo access association with, wherein the first STA and the second STA are not authorized users of the AP;
a fifth establishment module (1803), configured to establish a direct connection to the second STA by using the AP; and **characterized by**
a scheduling acceptance module (1804), configured to accept direct connection scheduling by the AP along with the second STA.

5. An AP, comprising:
a sixth establishment module (2001), configured to establish a pseudo access association with each of a first STA and a second STA, wherein the AP supports pseudo access, the first STA and the second STA are not authorized users of the AP, and a P2P connection is already established between the first STA and the second STA;
a seventh establishment module (2002), configured to establish a direct connection between the first STA and the second STA; and **characterized by**
a scheduling module (2003), configured to perform direct connection scheduling on the first STA and the second STA.

## Patentansprüche

1. Direktverbindungsplanungsverfahren für Pseudozugang, umfassend:
Einrichten, durch eine erste STA(tion), einer "Peer-to-Peer-" (P2P-)Verbindung zu einer zweiten STA (501, 601);
Einrichten, durch die erste STA und die zweite STA, einer Pseudozugangsverbindung mit einem selben AP (Zugriffspunkt), der Pseudozugang unterstützt (502, 604), wobei die erste STA und die zweite STA keine autorisierten Benutzer des AP sind;
Einrichten, durch die erste STA, einer Direktverbindung zur zweiten STA unter Verwendung des AP (503);
und **gekennzeichnet durch**
Annehmen, durch die erste STA und die zweite STA, der Direktverbindungsplanung durch den AP (504).

2. Verfahren nach Anspruch 1, wobei das Einrichten einer Pseudozugangsverbindung durch die erste STA und die zweite STA mit einem selben AP, der Pseudozugang unterstützt, insbesondere umfasst:
Finden, durch die erste STA, des AP, der Pseudozugang unterstützt (602);
Bekanntgeben, durch die erste STA an die zweite STA, einer Kennung des gefundenen AP unter Verwendung der P2P-Verbindung (603); und
Einrichten, sowohl durch die erste als auch die zweite STA, einer Pseudozugangsverbindung mit dem AP (604).

3. Direktverbindungsplanungsverfahren für Pseudozugang, umfassend:
Einrichten, durch einen AP, einer Pseudozugangsverbindung sowohl mit einer ersten STA als auch mit einer zweiten STA, wobei der AP Pseudozugang unterstützt, die erste STA und die zweite STA keine autorisierten Benutzer des AP sind, und zwischen der ersten STA und der zweiten STA bereits eine P2P-Verbindung eingerichtet ist (701);
Einrichten, durch den AP, einer Direktverbindung zwischen der ersten STA und der zweiten STA (702);
und **gekennzeichnet durch**
Vornehmen, durch den AP, einer Direktverbindungsplanung für die erste STA und die zweite STA (703).

4. STA, verwendet als eine erste STA, und umfassend:
ein drittes Einrichtungsmodul (1801), das dafür ausgelegt ist, eine P2P-Verbindung zu einer zweiten STA einzurichten;
ein viertes Einrichtungsmodul (1802), das dafür ausgelegt ist, eine Pseudozugangsverbindung mit einem AP, der Pseudozugang unterstützt, einzurichten, wobei der AP derselbe ist, mit dem die zweite STA eine Pseudozugangsverbindung eingerichtet hat oder einrichten wird, wobei die erste STA und die zweite STA keine autorisierten Benutzer des AP sind;
ein fünftes Einrichtungsmodul (1803), das dafür ausgelegt ist, unter Verwendung des AP eine Direktverbindung zur zweiten STA einzurichten; und
**gekennzeichnet durch**
ein Planungsannahmemodul (1804), das dafür ausgelegt ist, zusammen mit der zweiten STA eine Direktverbindungsplanung durch den AP anzunehmen.

5. AP, umfassend:
ein sechstes Einrichtungsmodul (2001), das dafür ausgelegt ist, eine Pseudozugangsverbindung sowohl mit einer ersten STA als auch mit einer zweiten STA einzurichten, wobei der AP Pseudozugang unterstützt, die erste STA und die zweite STA keine autorisierten Benutzer des AP sind, und zwischen der ersten STA und der zweiten STA bereits eine P2P-Verbindung eingerichtet ist;
ein siebtes Einrichtungsmodul (2002), das dafür ausgelegt ist, eine Direktverbindung zwischen der ersten STA und der zweiten STA einzurichten; und
**gekennzeichnet durch**
ein Planungsmodul (2003), das dafür ausgelegt ist, für die erste STA und die zweite STA eine Direktverbindungsplanung vorzunehmen.

## Revendications

1. Procédé de planification de connexion directe pour un pseudo-accès, le procédé consistant à :
établir, par une première STA, une connexion P2P avec une seconde STA (501, 601) ;
établir, par la première STA et la seconde STA, une association de pseudo-accès avec un même AP prenant en charge un pseudo-accès (502, 604), a première STA et la seconde STA n'étant pas des utilisateurs autorisés de l'AP ;
établir, par la première STA, une connexion directe avec la seconde STA au moyen de l'AP (503) ;
et le procédé étant **caractérisé par** l'étape consistant à :
accepter, par la première STA et la seconde STA, une planification de connexion directe par l'AP (504).

2. Procédé selon la revendication 1, dans lequel l'établissement, par la première STA et la seconde STA, d'une association de pseudo-accès avec un même AP prenant en charge un pseudo-accès, consiste spécifiquement à :
trouver, par la première STA, l'AP prenant en charge un pseudo-accès (602) ;
notifier, par la première STA à la seconde STA, un identifiant de l'AP trouvé au moyen de la connexion P2P (603) ; et
établir, par la première STA et la seconde STA, une association de pseudo-accès avec l'AP (604).

3. Procédé de planification de connexion directe pour un pseudo-accès, le procédé consistant à :
établir, par un AP, une association de pseudo-accès avec chacune des première et seconde STA, l'AP prenant en charge un pseudo-accès, la première STA et la seconde STA n'étant pas des utilisateurs autorisés de l'AP, et une connexion P2P étant déjà établie entre la première STA et la seconde STA (701) ;
établir, par l'AP, une connexion directe entre la première STA et la seconde STA (702) ;
et le procédé étant **caractérisé par** l'étape consistant à :
réaliser, par l'AP, une planification de connexion directe sur la première STA et la seconde STA (703).

4. STA, utilisée en tant que première STA, et comprenant :
un troisième module d'établissement (1801), configuré pour établir une connexion P2P avec une seconde STA ;
un quatrième module d'établissement (1802), configuré pour établir une association de pseudo-accès avec un même AP prenant en charge un pseudo-accès, l'AP étant le même que celui avec lequel la seconde STA a établi ou va établir une association de pseudo-accès, la première STA et la seconde STA n'étant pas des utilisateurs autorisés de l'AP ;
un cinquième module d'établissement (1803), configuré pour établir une connexion directe avec la seconde STA au moyen de l'AP ;
et la STA étant **caractérisée par** :
un module d'acceptation de planification (1804), configuré pour accepter une planification de connexion directe par l'AP conjointement avec la seconde STA.

5. AP, comprenant :
un sixième module d'établissement (2001), configuré pour établir une association de pseudo-accès avec chacune des première STA et seconde STA, l'AP prenant en charge un pseudo-accès, la première STA et la seconde STA n'étant pas des utilisateurs autorisés de l'AP, et une connexion P2P étant déjà établie entre la première STA et la seconde STA ;
un septième module d'établissement (2002), configuré pour établir une connexion directe entre la première STA et la seconde STA ;
et l'AP étant **caractérisé par** :
un module de planification (2003), configuré pour réaliser une planification de connexion directe sur la première STA et la seconde STA.
